# EUROPEAN PATENT SPECIFICATION

(11) **EP 1 123 771 B1**
(45) Date of publication and mention of the grant of the patent: **05.10.2005**
(21) Application number: 00310428.8
(22) Date of filing: 24.11.2000
(51) Int. Cl.: B23K 20/12

(54) **Structure including friction stir welding joint**
Umgerührte Reibschweissverbindungen enthaltendes Bauelement
Structure comprenant des soudures obtenues par soudage par friction remué

(30) Priority: 27.01.2000 JP 2000018262
(43) Date of publication of application: 16.08.2001
(73) Proprietor: Hitachi, Ltd., Tokyo 100-8010 (JP)
(72) Inventor: Nakamura, Hideyuki, Kudamatsu-shi, Yamaguchi 744-0002 (JP); Kawasaki, Takeshi, Kudamatsu-shi, Yamaguchi 744-0006 (JP); Makino, Toshiaki, Kudamatsu-shi, Yamaguchi 744-0062 (JP); Ina, Yoshihiko, Kudamatsu-shi, Yamaguchi 744-0011 (JP)
(74) Representative: Paget, Hugh Charles Edward

(56) References cited:
- PATENT ABSTRACTS OF JAPAN vol. 1999, no. 13, 30 November 1999 (1999-11-30) -& JP 11 226755 A (NIPPON LIGHT METAL CO LTD), 24 August 1999 (1999-08-24)
- PATENT ABSTRACTS OF JAPAN vol. 2000, no. 04, 31 August 2000 (2000-08-31) -& JP 2000 000681 A (HITACHI LTD;KASADO KIKAI KOGYO KK), 7 January 2000 (2000-01-07) & EP 0 985 483 A (HITACHI LTD) 15 March 2000 (2000-03-15)

## Description

### BACKGROUND OF THE INVENTION

### Technical Field

The present invention relates to a structure comprising two members, and containing a friction stir welding joint, for example a structure body of a railway vehicle or a building structure etc. in which an aluminum alloy hollow extruded frame member and a second member are joined by faction stir welding.

### Prior Art

Friction stir welding is a method in which by rotating a round rod (here called "a rotary tool") which is inserted into a welding portion and moving the rotary tool along the welding line of a hollow extruded frame member, the welding portion is heated, softened and plastically fluidised and is solid-state welded. The rotary tool is comprised of a small diameter portion which is inserted into the welding portion and a large diameter portion which is positioned next to the small diameter portion of the rotary tool. The small diameter portion and the large diameter portion of the rotary tool have the same axis.

The boundary or shoulder between the small diameter portion and the large diameter portion of the rotary tool is inserted a little into the welding portion. The above stated technique is disclosed, for example in Japanese laid-open patent application No. Hei 9-309164 (EP 0797043 A2).

The difference between friction stir welding and arc welding is that by insertion of the rotary tool a large load acts on the hollow extruded frame members to be subjected to the welding. This load acts mainly in the insertion direction (axial direction) of the rotary tool. In other words, this insertion force of the rotary tool acts on the hollow extruded frame members to be subjected to the welding.

When a hollow extruded frame member having two face plates and a rib connecting the two face plates is subjected to friction stir welding, the above stated insertion force acts on the face plate of a portion around the welding portion and the rib connecting the face plates. As a result, it is necessary to prevent deformation of this joint portion.

Deformation prevention means is shown in Japanese laid-open patent application No. Hei 9-309164 (EP 0797043 A2). At the welding portion a vertical plate (called longitudinal rib) connecting the two face plates is provided. This longitudinal rib is one of the ribs connecting the two face plates. The longitudinal rib is aligned on the axis of the rotary tool. With this method, since the longitudinal rib supports the insertion force, the deformation of the joint portion can be prevented.

However, since the large load acts on the longitudinal rib, a high stress is generated in the connection portion of the longitudinal rib and the face plate, in which a stress concentration exists. As a result, there is a risk of failure of the longitudinal rib.

To prevent the failure of the longitudinal rib, a surface of the connection portion between the longitudinal rib and the face plate may be formed as a concave circular arc having a large diameter, so that the longitudinal rib and the face plate are connected smoothly and the stress concentration on the connection portion between the longitudinal rib and the face plate is mitigated.

However, the larger the diameter of the above stated circular arc, the more the cross-sectional area of the joint portion increases, and accordingly the weight of the joint portion increases, which is contrary to the objective of a light weight structure including the hollow extruded frame members.

JP2000000681, which document represents the closest state of the art, shows a similar structure in which a convex projection is provided at the connection of the longitudinal rib and the face plate, and discloses the preamble of claim 1.

### SUMMARY OF THE INVENTION

An object of the present invention is to provide a structure including a hollow extruded frame member having two face plates and a rib connecting the two face plates, in which a light weight structure can be attained.

The present invention provides a structure as set out in claim 1.

### BRIEF DESCRIPTION OF THE DRAWINGS

Fig. 1 is a longitudinal cross-sectional view showing a welding portion of a structure body of one embodiment according to the present invention;
Fig. 2 is a longitudinal cross-sectional view showing a vicinity of a structure body of one embodiment according to the present invention;
Fig. 3 is a perspective view of a railway vehicle structure body having the structure body on one embodiment according to the present invention;
Fig. 4 is a longitudinal cross-sectional view showing a welding portion of a structure body of a further embodiment according to the present invention; and
Fig. 5 is a longitudinal cross-sectional view showing a vicinity of the structure body of another embodiment according to the present invention.

### DESCRIPTION OF THE EMBODIMENTS

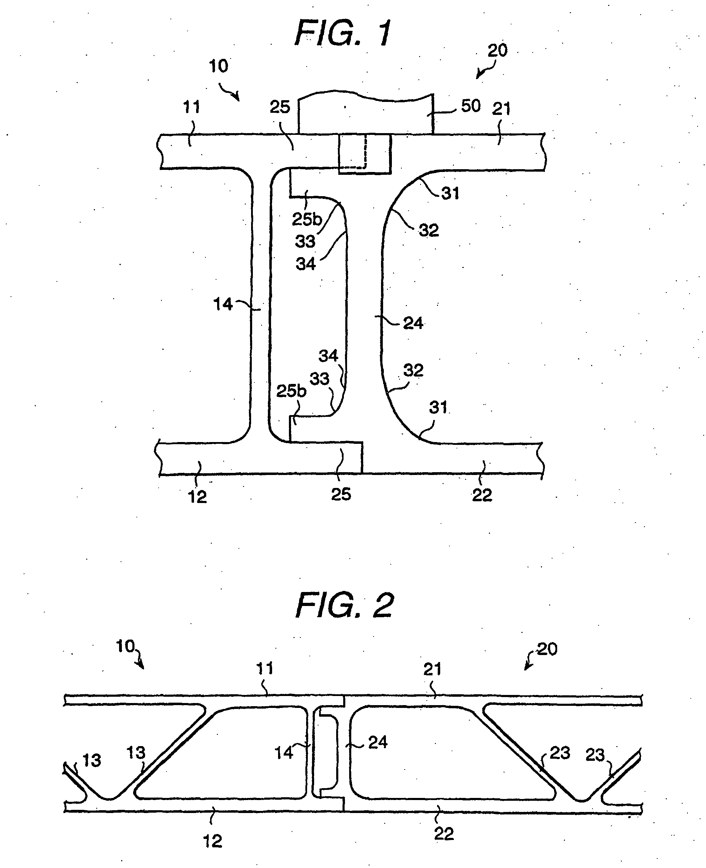

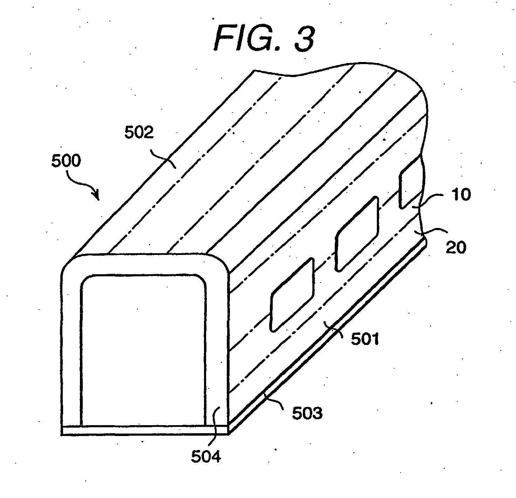

A structure body of one embodiment according to the present invention will be explained referring to Fig. 1 to Fig. 3. A railway vehicle structure body 500 is comprised of a side structure body 501 constituting a side face, a roof structure body 502 constituting a roof, a stand frame 503 constituting a floor, and a side structure body 504 constituting an end portion in a longitudinal direction.

Each of the side structure body 501, the roof structure body 502, and the stand frame 503 is constituted respectively by welding plural extruded frame members. The extrusion direction of the extruded frame member is in the longitudinal direction of the railway vehicle structure body 500. The extruded frame member is a one-piece hollow extruded frame member made of an aluminum alloy.

A structure of hollow extruded frame members 10 and 20 for constituting the side structure body 501 will be explained. Other portions and other structure bodies are similar to that of the above stated side structure body 501.

The hollow extruded frame member 10 is comprised of two sheet face plates 11 and 12 and plural ribs 13 and 14 connecting the two face plates 11 and 12. The hollow extruded frame member 20 is comprised of two sheet face plates 21 and 22 and plural ribs 23 and 24 connecting the two face plates 21 and 22.

The connection portions between the rib 24 and the face plates 21 and 22 form seats (recessed portions) 25, with flanges 25b which project towards the adjacent hollow extruded frame member 10.

The two sheet face plates 11 and 12 are substantially parallel. The ribs 13 form a truss structure and the pitch of the truss structure is uniform. The rib 14 is substantially orthogonal to the two face plates 11 and 12. The two sheet face plates 21 and 22 are substantially parallel. The ribs 23 form a truss structure and the pitch of the truss structure is uniform. The rib 24 is substantially orthogonal to the two face plates 21 and 22.

The plate thickness of the rib 24 of the end portion of the hollow extruded frame member 20 is more than the plate thickness of other ribs 13,14 and 23.

The end portions of the face plates 11 and 12 are overlapped with the seats 25 and are abutted to the shoulder portions of the face plates 21 and 22 at the seats 25. The butted portion is joined by friction stir welding. The shoulder face of the face plate 21 is positioned within the extension of the thickness of the rib 24 and is substantially orthogonal to the plane of the face plate 21.

The surfaces of the connection portion between the face plate 21 and the rib 24 as seen in cross-section are at the inside of a smooth curved line constituted by circular arcs 31 and 32 and at the outside a smooth curved line constituted by circular arcs 33 and 34. The connection portion between the face plate 22 and the rib 24 is the same.

The circular arcs 31 and 32 are a connection line between one face of the rib 24 and the inside face of the face plate 21. The circular arcs 33 and 34 are a connection line between the other face of the rib 24 and the inner face of the flange 25b. The circular arcs 31, 32,33 and 34 are the circular arcs which are recessed in a solid side of the hollow extruded frame member 20. The same applies for the connection between the rib 24 and the face plate 22. In each case there is a smooth curving connection of the respective surfaces of the rib 24 and the face plates 21,22.

The diameter of the circular arc 31 at a side of the face plate 21 is smaller than that of the circular arc 32 at a side of the rib 24, and the diameter of the circular arc 33 at a side of the flange 25b is smaller than that of the circular arc 34 at the side of the rib 24. The same is true for the connection between the rib 24 and the face plate 22.

During the friction stir welding operation, the axis of a rotary tool 50 is positioned at the butt portion of the two hollow extruded frame members 10 and 20. Accordingly, a large load in an axial direction of the rotary tool 50 acts along the rib 24. As a result, a high stress generates at a position of a near vicinity of the rib 24.

Within the connection portion between the end portions of the face plates 21 and 22 and the rib 24 at the high stress generation position, since the diameters of the circular arcs 32 and 34 at the side of the rib 24 are formed large, the stress concentration of the connection portion is mitigated and the stress generated is reduced.

On the other hand, since the diameters of the circular arcs 31 and 33 at the side of the each face plate 21,22 and at the side of the flange 25b are relatively small, the cross-sectional areas of these portions is minimized, so that the cross-sectional area of the whole joint portion is kept small, and accordingly the weight of the joint portion is low.

If the arc of the connection portions between the face plates 21 and 22, the flanges 25b and the rib 24 are connected with one large circular arc (a single smooth circular arc having only one large diameter), the generation stress can be equal to the generation stress of the above embodiment according to the present invention, but in this alternative the cross-sectional area of this portion becomes large, so that weight reduction in the structure body cannot be attained.

In the above embodiment according to the present invention, the welding method of the two connection points of the hollow extruded frame members 10 and 20 is friction stir welding, but it may alternatively be arc welding at either one of the welding points.

In the above embodiment according to the present invention, the welding method of the connection portions of the hollow extruded frame members 10 and 20 is butted friction stir welding, but overlap friction stir welding may be employed.

In the above embodiment according to the present invention, the face plates 11 and 12 and the face plates 21 and 22 are parallel, but one face plate may be inclined with another face plate.

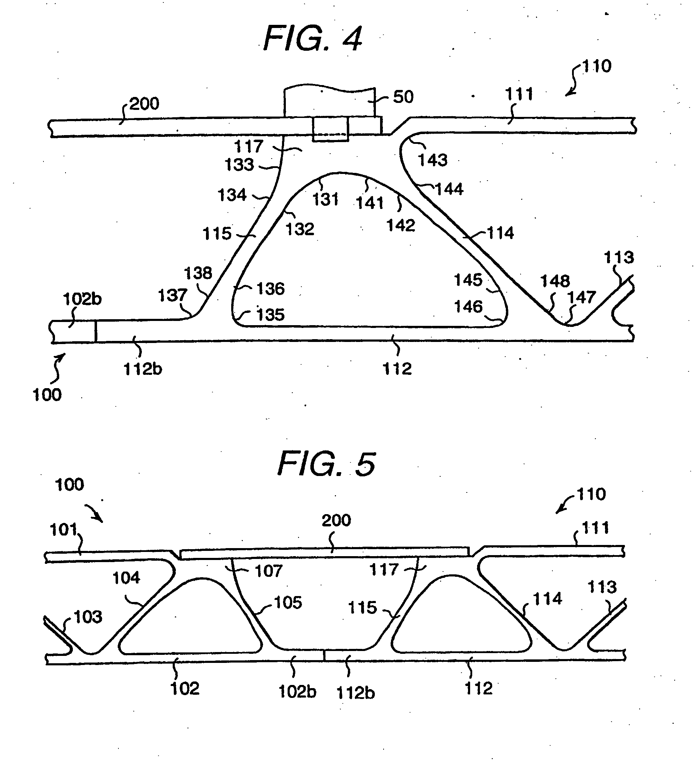

Another embodiment according to the present invention will be explained referring to Fig. 4 and Fig. 5. In this embodiment according to the present invention, the rib of the end portion forms part of the truss structure. At the vicinity of an apex of this truss structure the friction stir welding is carried out. Two ribs of the truss structure support the force of the friction stir welding. Accordingly, the above stated circular arcs are employed at the two ribs.

The hollow extruded frame member 100 comprises two face plates 101 and 102 and plural ribs 103,104 and 105. The hollow extruded frame member 110 comprises two face plates 111 and 112 and plural ribs 113,114 and 115 connecting the face plates 111 and 112.

The face plates 101 and 102 are substantially parallel. The end portion of the face plate 112 at an outer side of the car projects further towards the adjacent hollow extruded frame member 110 than the end portion of the face plate 101. This projecting face plate 102b and the corresponding projecting face plate 112b of the member 110 are butted and are joined by friction stir welding from the upper side (the inner side of the railway car).

The ribs 103,104 and 105 are inclined to the two face plates 101 and 102 and are arranged as the truss structure. The intersection (an apex of the truss structure) between the rib 105 at the end portion and the rib 104 is formed with a recess which forms a seat 117 for mounting a connection plate 200. The connection plate 200 is overlapped on the seat 107, and at this overlapped portion joining is carried out by friction stir welding using the rotary tool 50.

The ribs 113,114 and 115 are likewise inclined to the two face plates 111 and 112 and are arranged as the truss structure. The intersection between the end rib 115 and the rib 114 is formed with a recess which forms a seat 117 for mounting the connection plate 200. The connection plate 200 is overlapped on the seat 117 and joined to the member 110 by friction stir welding using the rotary tool 50.

The plate thickness of the ribs 104 and 105 is more than that of other ribs 103. The inclination angle of the rib 105 to the face plate 102 is larger than that of the rib 104. Accordingly, the plate thickness of the rib 105 is larger than that of the rib 104.

The plate thickness of the ribs 114 and 115 is more than that of other ribs 113. The inclination angle of the rib 115 to the face plate 112 is larger than that of the rib 114. Accordingly, the thickness of the rib 115 is formed larger than that of the rib 114.

The welding procedure of the structure body will be explained. The face plates 102 and 112 of the hollow extruded frame members 100 and 200 are mounted on a bed or stand and the face plates 102b and 112b are butted. With this condition, to this butted portion, from the upper side the rotary tool 50 is inserted and then the friction stir welding is carried out.

Next, the connection plate 200 is mounted on the seats 107 and 117, and the ends thereof are located by preliminary fixture welding to the face plates 101 and 111. This preliminary fixture welding is carried out intermittently along the welding line.

Next, from the upper side (the inner side of the car) using the rotary tool 50 the connection plate 200 is joined by the friction stir welding to the seat 107. The insertion position of the rotary tool 50 is in the vicinity of the intersection (the position of the apex of the truss structure) of the two ribs 103 and 104.

Next, from the upper side (the inner side of the car) using the rotary tool 50 the connection plate 200 is joined by friction stir welding to the seat 117. The intersection position of the rotary tool 50 is in the vicinity of the intersection of the two ribs 204 and 205.

Next, the detailed constructions of the connection portion between the end portion of the face plate 111 and the rib 115 and the connection portion between the face plate 112 and the rib 115 are described.

The surfaces of the connection between the end portion of the face plate 111 and the rib 115 are constituted of a smooth curved line constituted by the circular arcs 131 and 132 and a smooth curved line constituted by the circular arcs 133 and 134. The circular arcs 131,132,133 and 134 are the circular arcs which are recessed at the solid side of the hollow extruded frame member 110. The diameter of the circular arc 131 is smaller than that of the circular arc 132, and the diameter of the circular arc 133 is smaller than that of the circular arc 134.

The surfaces of the connection portion between the face plate 112 (112b) and the rib 115 are constituted of a smooth curved line constituted by the circular arcs 135 and 136 and a smooth curved line constituted by the circular arcs 137 and 138. The circular arcs 135,136,137 and 138 are the circular arcs which are recessed at the solid side of the hollow extruded frame member 110. The diameter of the circular arc 135 is smaller than that of the circular arc 136 and the diameter of the circular arc 137 is smaller than that of the circular arc 138.

The surfaces of the connection portion between the end portion of the face plate 111 and the rib 114 are constituted of a smooth curved line constituted by the circular arcs 141 and 142 and a smooth curved line constituted by the circular arcs 143 and 144. The circular arcs 141,142,143 and 144 are the circular arcs which are recessed at the solid side of the hollow extruded frame member 110. The diameter of the circular arc 141 is smaller than that of the circular arc 142 and the diameter of the circular arc 143 is smaller than that of the circular arc 144.

The surfaces of the connection portion between the face plate 112 and the rib 114 are constituted of a smooth curved line constituted by the circular arcs 145 and 146 and a smooth curved line constituted by the circular arcs 147 and 148. The circular arcs 145,146,147 and 148 are the circular arcs which are recessed at the solid side of the hollow extruded frame member 110. The diameter of the circular arc 145 is smaller than that of the circular arc 146 and the diameter of the circular arc 147 is smaller than that of the circular arc 148.

The construction of the hollow extruded frame member 100 is similar to the construction of the hollow extruded frame member 110.

With the above stated construction, since the surfaces of the connection portion of the face plate 111 (112) and the ribs 114 and 115 is constituted of the smooth curved line in which the circular arc is constituted to recess at the solid side of the hollow extruded frame member 110, and the diameter of the circular arc at the high stress generation position is formed large, the stress construction can be mitigated and the stress generation can be small. Accordingly, the weight structure of the joint portion is low.

Further, since the insertion force of the rotary tool 50 in this embodiment according to the present invention is supported by the two ribs 114 and 115, in comparison with the construction in which as shown in the embodiment according to the present invention of Fig. 1 in which the insertion force of the rotary tool 50 is supported by only one rib, the plate thickness of the ribs 114 and 115 can be small, reducing the weight of the hollow extruded frame member.

In this embodiment, the welding method of the three connection points of the hollow extruded frame members 100 and 110 is carried out by the friction stir welding, but arc welding can be employed at one or two of the three welding points.

In this embodiment, the welding method of the joints of the hollow extruded frame member 100 and 110 and the flat plate 200 (the connection plate) is overlap friction stir welding, but butt friction stir welding may be employed instead. The welding method of the joint of the hollow extruded frame members 100 and 110 is carried out by butt friction stir welding, but overlap friction stir welding may be substituted.

The face plates 101 and 102 and the face plates 111 and 112 are parallel, but one face plate may be inclined with another face plate.

## Claims

1. A structure comprising a first member (20; 110) having two face plates (21,22; 111,112) connected by a rib (24; 114,115), and a second member (10; 100; 200) joined by friction stir welding to a connection portion of said first member (20; 110) at which one of the face plates of said first member and said rib thereof are connected, said connection portion having at least one surface passing from the face plate to the rib,
**characterised in that** said surface as seen in section is a combination of two mutually continuous concave circular arcs (31,32,33,34; 131-138, 141-148) wherein the diameter of the concave circular arc (31,33; 131,133,135,137 etc.) closer to the face plate is smaller than the diameter of the concave circular arc (32,34; 132,134,136,138 etc.) closer to said rib.

2. A structure according to claim 1, wherein at both sides of said rib there is present a said surface which, as seen in section, is a combination of said two mutually continuous concave circular arcs.

3. A structure according to claim 1 or 2, wherein at each of the connection portions of said rib to the respective face plates, there is at least one said surface which, as seen in section, is a combination of said two mutually continuous concave circular arcs.

## Patentansprüche

1. Struktur umfassend ein erstes Element (20; 110) mit zwei durch eine Rippe (24; 114, 115) verbundenen Frontplatten (21, 22; 111, 112) und einem durch Reibrührschweißen mit einem Verbindungsabschnitt des ersten Elements (20; 110) verbundenes zweites Element (10; 100; 200), wobei eine der Frontplatten des ersten Elements und dessen Rippe an dem Verbindungsabschnitt verbunden sind, wobei der Verbindungsabschnitt mindestens eine von der Frontplatte zur Rippe reichende Oberfläche aufweist,
**gekennzeichnet dadurch, daß** die Oberfläche in Schnittansicht eine Kombination zweier wechselweise durchgehender konkaver Kreisbögen (31, 32, 33, 34; 131-138, 141-148) ist, wobei der Durchmesser des konkaven Kreisbogens (31, 33; 131, 133, 135, 137, etc.) näher an der Frontplatte kleiner ist als der Durchmesser des konkaven Kreisbogens (32, 34; 132, 134, 136, 138, etc.) näher an der Rippe.

2. Struktur nach Anspruch 1, wobei auf beiden Seiten der Rippe eine solche Oberfläche vorhanden ist, die in Schnittansicht gesehen eine Kombination zweier wechselweise durchgehender konkaver Kreisbögen ist.

3. Struktur nach Anspruch 1 oder 2, wobei an jedem der Verbindungsabschnitte der Rippe mit der jeweiligen Frontplatte mindestens eine solche Oberfläche vorhanden ist, die in Schnittansicht gesehen eine Kombination zweier wechselweise durchgehender konkaver Kreisbögen ist.

## Revendications

1. Structure comportant un premier élément (20 ; 110) ayant deux plaques de face (21, 22 ; 111, 112) connectées par une entretoise (24 ; 114, 115), et un second élément (10 ; 100 ; 200) relié par l'intermédiaire d'un soudage par friction-malaxage à une partie de connexion dudit premier élément (20 ; 100) à laquelle une des plaques de face dudit premier élément et ladite entretoise de celui-ci sont connectées, ladite partie de connexion ayant au moins une surface passant depuis la plaque de face vers l'entretoise,
**caractérisée en ce que** ladite surface, lorsqu'elle est vue en coupe, est une combinaison de deux arcs circulaires concaves mutuellement continus (31, 32, 33, 34 ; 131 à 138 ; 141 à 148), le diamètre de l'arc circulaire concave (31, 33 ; 131, 133, 135, 137 etc.) plus proche de la plaque de face étant plus petit que le diamètre de l'arc circulaire concave (32, 34 ; 132, 134, 136, 138 etc.) plus proche de ladite entretoise.

2. Structure selon la revendication 1, dans laquelle des deux côtés de ladite entretoise est présente ladite surface qui, vue en coupe, est une combinaison desdits deux arcs circulaires concaves mutuellement continus.

3. Structure selon la revendication 1 ou 2, dans laquelle à chacune des parties de connexion de ladite entretoise aux plaques de face respectives se trouve au moins ladite surface qui, vue en coupe, est une combinaison desdits deux arcs circulaires concaves mutuellement continus.
